# EUROPÄISCHE PATENTSCHRIFT

(11) **EP 1 919 991 B1**
(45) Veröffentlichungstag und Bekanntmachung des Hinweises auf die Patenterteilung: **11.02.2009**
(21) Anmeldenummer: 06792754.1
(22) Anmeldetag: 09.08.2006
(51) Int. Cl.: C08J 9/00

(54) **VERFAHREN ZUR HERSTELLUNG VON SCHAUMSTOFFPLATTEN**
METHOD FOR PRODUCING FOAM PLATES
PROCEDE POUR PRODUIRE DES PLAQUES EN MATERIAU ALVEOLAIRE

(30) Priorität: 23.08.2005 DE 102005039976; 05.04.2006 EP 06112268
(43) Veröffentlichungstag der Anmeldung: 14.05.2008
(73) Patentinhaber: BASF SE, 67056 Ludwigshafen (DE)
(72) Erfinder: ALLMENDINGER, Markus, 67480 Edenkoben (DE); HAHN, Klaus, 67281 Kirchheim (DE); SCHMIED, Bernhard, 67227 Frankenthal (DE); RIETHUES, Michael, 67071 Ludwigshafen (DE); ANTONATUS, Edith, 67112 Mutterstadt (DE)
(86) Internationale Anmeldenummer: PCT/EP2006/065178
(87) Internationale Veröffentlichungsnummer: WO 2007/023092

(56) Entgegenhaltungen:
- WO-A-20/05056268
- US-A1- 2004 054 020

## Beschreibung

Die Erfindung betrifft ein Verfahren zur Herstellung von Schaumstoffformkörpern aus vorgeschäumten Schaumstoffpartikeln, welche eine Polymerbeschichtung aufweisen, sowie daraus hergestellte Schaumstoffformköper und deren Verwendung.

Partikelschaumstoffe werden üblicherweise durch Versintern von Schaumstoffpartikeln, beispielsweise aus vorgeschäumten expandierbaren Polystyrol partikeln (EPS) oder expandierten Polypropylenpartikeln (EPP), in geschlossenen Formen mittels Wasserdampf erhalten. Damit die Schaumpartikel nachexpandieren und miteinander zu dem Schaumstoffformkörper gut verschweißen können, müssen sie in der Regel noch geringe Restmengen an Treibmittel enthalten. Die Schaumstoffpartikel dürfen daher nach dem Vorschäumen nicht zu lange gelagert werden. Auch können aufgrund der fehlenden Nachexpandierbarkeit von zerkleinerten Schaumstoffrecyclaten aus nicht mehr verwendungsfähigen Partikelschaumstoffen nur geringe Mengen zur Herstellung neuer Schaumstoffformkörper zugemischt werden.

Es sind PS Partikel-Schaumstoff-Composite bekannt, die bei Beschichtung der EPS Perlen mit Wasserglas oder ähnlichen anorganischen Materialien zu brandfesteren Produkten führen. Ein Nachteil hierbei ist jedoch, dass die Wasseraufnahme derartiger Produkte erhöht ist, was im Einsatz als Dämmmaterial zu einer möglichen Verschlechterung des Isolationsvermögens über die Zeit führt.

Die WO 00/050500 beschreibt flammgeschützte Schaumstoffe aus vorgeschäumten Polystyrolpartikeln, welche zusammen mit einer wässrigen Natriumsilikatlösung und einem Latex eines hochmolekularen Vinylacetatcopolymer gemischt, in eine Form gegossen und unter Schütteln an Luft getrocknet werden. Hierbei entsteht nur eine lose Schüttung aus Polystyrolpartikeln, die an wenigen Punkten miteinander verklebt sind und daher nur ungenügende mechanische Festigkeiten aufweisen.

Die WO 2005/105404 beschreibt ein energiesparendes Verfahren zur Herstellung von Schaumstoffformkörpern, bei der die vorgeschäumten Schaumstoffpartikel mit einer Harzlösung beschichtet werden, welche eine gegenüber dem expandierbaren Polymer niedrigere Erweichungstemperatur aufweist. Die beschichteten Schaumpartikel werden anschließend in einer Form unter Anwendung äußeren Drucks oder durch Nachexpansion der Schaumpartikel wie üblich mit heißem Wasserdampf verschweißt. Hierbei können wasserlösliche Bestandteile der Beschichtung ausgewaschen werden. Aufgrund der höheren Temperaturen an den Eintrittstellen und dem Abkühlen des Wasserdampfes beim Kondensieren, kann die Verschweißung der Schaumpartikel und die Dichte kann über den gesamten Schaumstoffkörper erheblich schwanken. Außerdem kann kondensierender Wasserdampf in den Zwickeln zwischen den Schaum partikeln eingeschlossen werden.

Hydrophob ausgerüstete, expandierbare Polystyrolpartikel zur Perimeterdämmung sind beispielsweise aus WO 97/4334 und EP-A 913 423 bekannt. Die Hydroprobierungsmittel werden hierbei auf die EPS-Partikel unmittelbar nach der Aufarbeitung und Trocknung auf Kieselgel adsorbiert aufgebracht.

Aufgabe der Erfindung war es daher, den genannte Nachteilen abzuhelfen und ein einfaches und energiesparendes Verfahren zur Herstellung von Schaumstoffformkörpern mit verringertem Wasseraufnahmevermögen und guten mechanischen Eigenschaften, sowie ausreichendem Flammschutz zu finden.

Demgemäss wurde ein Verfahren zur Herstellung von Schaumstoffformkörpern aus vorgeschäumten Schaumstoffpartikeln, welche eine Polymerbeschichtung aufweisen, in einer Form unter Druck gefunden, wobei die Polymerbeschichtung eine amphiphile oder hydrophobe organische Verbindung enthält.

Als Schaumstoffpartikel können expandierte Polyolefine, wie expandiertes Polyethylen (EPE) oder expandierteres Polypropylen (EPP) oder vorgeschäumte Partikel aus expandierbaren Styrolpolymeren, insbesondere expandierbarem Polystyrol (EPS) eingesetzt werden. Die Schaumstoffpartikel weisen in der Regel einen mittleren Partikeldurchmesser im Bereich von 2 bis 10 mm auf. Die Schüttdichte der Schaumstoffpartikel beträgt in der Regel 5 bis 50 kg/m³, bevorzugt 5 bis 40 kg/m³ und insbesondere 8 bis 16 kg/m³, bestimmt nach DIN EN ISO 60.

Die Schaumstoffpartikel auf Basis von Styrolpolymeren können durch Vorschäumen von EPS mit Heißluft oder Wasserdampf in einem Vorschäumer auf die gewünschte Dichte erhalten werden. Durch ein- oder mehrmaliges Vorschäumen in einem Druck- oder kontinuierlichen Vorschäumer können hierbei Endschüttdichten unter 10 g/l erhalten werden.

Die Polymerbeschichtung enthält erfindungsgemäß als Hydrophobierungsmittel amphiphile oder hydrophobe organische Verbindung. Unter den hydrophoben organischen Verbindungen sind insbesondere C₁₀ - C₃₀- Parafinwachse, Umsetzungsprodukte aus N-Methylolamin und einem Fettsäurederivate, Umsetzungsprodukte eines C₉-C₁₁-Oxoalkohols mit Ethylenoxid, Propylenoxid oder Butylenoxid oder Polyfluoralkyl(meth)acrylate oder Mischungen davon zu nennen, die vorzugsweise in Form wässriger Emulsionen eingesetzt werden können.

Bevorzugte Hydrophobierungsmittel sind Paraffinwachse mit 10 bis 30 C-Atomen in der Kohlenstoffkette, die vorzugsweise einen Schmelzpunkt zwischen 10 und 70°C, insbesondere zwischen 25 und 60°C, aufweisen. Derartige Paraffinwachse sind beispielsweise in den BASF-Handelsprodukten RAMASIT KGT, PERSISTOL E und PERSISTOL HP sowie in AVERSIN HY-N von Henkel und CEROL ZN von Sandoz enthalten.

Eine andere Klasse geeigneter Hydrophobierungsmittel sind harzartige Umsetzungsprodukte von einem N-Methylolamin mit einem Fettsäurederivat, z.B. einem Fettsäureamid, -amin oder-alkohol, wie sie z.B. in US-A 2 927 090 oder GB-A 475 170 beschrieben sind. Ihr Schmelzpunkt liegt im allgemeinen bei 50 bis 90°C. Derartige Harze sind z.B. in dem BASF-Handelsprodukt PERSISTOL HP und in ARCOPHOB EFM von Hoechst enthalten.

Schließlich sind auch Polyfluoralkyl(meth-)acrylate geeignet, beispielsweise Polyperfluoroctylacrylat. Diese Substanz ist in dem BASF-Handelsprodukt PERSISTOL O und in OLEOPHOBOL C von Pfersee enthalten.

Als amphiphile Hydrophobierungsmittel kommen Antistatika, wie Emulgator K30 (Gemisch aus sekundären Natriumalkansulfonaten) oder Glycerinstearate, wie Glycerinmonostearat GMS oder Glycerintristearat in Betracht.

Ein bevorzugtes Verfahren umfasst die Stufen
a) Vorschäumen von expandierbaren Styrolpolymeren zu Schaumstoffpartikeln,
b) Beschichten der Schaumstoffpartikel mit einer Polymerlösung oder wässrigen Polymerdispersion,
c) Einfüllen der beschichteten Schaumstoffpartikel in eine Form und Versintern unter Druck in Abwesenheit von Wasserdampf.

Aufgrund ihrer hohen Wärmedämmfähigkeit verwendet man besonders bevorzugt vorgeschäumte, expandierbare Styrolpolymerisate, die athermane Festkörper, wie Ruß, Aluminium oder Graphit, insbesondere Graphit einer mittleren Partikelgröße im Bereich von 1 bis 50 µm Partikeldurchmesser in Mengen von 0,1 bis 10 Gew.-%, insbesondere 2 bis 8 Gew.-%, bezogen auf EPS, enthalten und beispielsweise aus EP-B 981 574 und EP-B 981 575 bekannt sind.

Die Polymerschaumpartikel sind insbesondere mit Flammschutzmitteln ausgerüstet. Sie können hierzu beispielsweise 1 bis 6 Gew.-% einer organischen Bromverbindung, wie Hexabromcylcodecan (HBCD) und gegebenenfalls zusätzlich 0,1 bis 0,5 Gew.-% Dicumyl oder eines Peroxides enthalten.

Bei dem erfindungsgemäßen Verfahren können auch zerkleinerte Schaumstoffpartikel aus recyclierten Schaumstoffformkörpern eingesetzt werden. Zur Herstellung der erfindungsgemäßen Schaumstoffformkörper können die zerkleinerten Schaumstoffrecyclate zu 100% oder z. B in Anteilen von 2 bis 90 Gew.%, insbesondere 5 bis 25 Gew.% zusammen mit Neuware eingesetzt werden, ohne wesentliche Beeinträchtigung des Festigkeit und der mechanischen Eigenschaften.

In der Regel besteht die Beschichtung aus einem Polymerfilm, der eine oder mehrere Glasübergangstemperaturen im Bereich von -60° bis + 100°C aufweist und in dem gegebenenfalls Füllstoffe eingebettet sein können. Bevorzugt liegen die Glasübergangstemperaturen des Polymerfilmes im Bereich von -30° bis + 80°C, besonders bevorzugt im Bereich von -10° bis + 60°C. Die Glasübergangstemperatur kann mittels Differential Scanning Calorimetrie (DSC) bestimmt werden. Das Molekulargewicht des Polymerfilms, bestimmt nach Gelpermeationschromatographie (GPC), liegt bevorzugt unter 400.000g/mol.

Zur Beschichtung der Schaumstoffpartikel können übliche Verfahren, wie Besprühen, Tauchen oder Benetzen der Schaumpartikel mit einer Polymerlösung oder Polymerdispersion oder Auftrommeln von festen oder auf Feststoffen absorbierten Polymeren in üblichen Mischern, Sprühvorrichtungen, Tauchvorrichtungen bzw. Trommelapparaturen eingesetzt werden.

Für die Beschichtung eigenen sich beispielsweise Polymere auf Basis von Monomeren wie vinylaromatischen Monomeren, wie α-Methylstyrol, p-Methylstyrol, Ethylstyrol, tert.-Butylstyrol, Vinylstyrol, Vinyltoluol, 1,2-Diphenylethylen, 1,1-Diphenylethylen, Alkenen, wie Ethylen oder Propylen, Dienen, wie 1,3-Butadien, 1,3-Pentadien, 1,3-Hexadien, 2,3-Dimethylbutadien, Isopren, Piperylen oder Isopren, a,β-ungesättigten Carbonsäuren, wie Acrylsäure und Methacrylsäure, deren Estern, insbesondere Alkylester, wie C₁₋₁₀-Alkylester der Acrylsäure, insbesondere die Butylester, vorzugsweise n-Butylacrylat, und die C₁₋₁₀-Alkylester der Methacrylsäure, insbesondere Methylmethacrylat (MMA), oder Carbonsäureamide, beispielsweise Acrylsäureamid und Methacrylsäureamid.

Die Polymeren können gegebenenfalls 1 bis 5 Gew.-% Comonomere, wie (Meth)acrylnitril, (Meth)acryl-amid, Ureido(meth)acrylat, 2-Hydroxyethyl(meth)acrylat, 3-Hydroxypropyl(meth)acrylat, Acrylamidpropansulfonsäure, Methylolacrylamid oder das Natriumsalz der Vinylsulfonsäure enthalten.

Bevorzugt sind die Polymeren der Beschichtung aus ein oder mehreren der Monomeren Styrol, Butadien, Acrylsäure, Methacrylsäure, C₁₋₄-Alkylacrylaten, C₁₋₄-Alkylmethacrylaten, Acrylsäureamid, Methacrylsäureamid oder Methylolacrylsäureamid aufgebaut.

Als Bindemittel für die Polymerbeschichtung eignen sich insbesondere Acrylatharze, die bevorzugt als wässrige Polymerdispersionen auf die Schaumstoffpartikel, gegebenenfalls zusätzlich mit hydraulischen Bindemittel auf Basis von Zement, Kalkzement oder Gips aufgetragen werden. Geeignete Polymerdispersionen sind beispielsweise durch radikalische Emulsionspolymerisation von ethylenisch ungesättigten Monomeren, wie Styrol, Acylate oder Methacrylate, wie in WO 00/50480 beschrieben, erhältlich.

Besonders bevorzugt sind reine Acrylate oder Styrol-Acrylate, welche aus den Monomeren Styrol, n-Butylacrylat, Methylmetharcylat (MMA), Methacrylsäure, Acrylamid oder Methylolacrylamid, aufgebaut sind.

Die Herstellung der Polymerdispersion erfolgt in an sich bekannter Weise, etwa durch Emulsions-, Suspensions-, oder Dispersionspolymerisation, bevorzugt in wässriger Phase. Man kann das Polymer auch durch Lösungs- oder Massepolymerisation herstellen, ggf. zerteilen und die Polymerpartikel anschließend in Wasser in üblicher Weise dispergieren. Bei der Polymerisation werden die für das jeweilige Polymerisationsverfahren üblichen Initiatoren, Emulgatoren bzw. Suspensionshilfsmittel, Regler bzw. sonstigen Hilfsstoffe mitverwendet; und man polymerisiert kontinuierlich oder diskontinuierlich bei den für das jeweilige Verfahren üblichen Temperaturen und Drucken in gebräuchlichen Reaktoren.

Die Polymerbeschichtung kann auch weitere Additive, wie anorganische Füllstoffe, wie Pigmente oder Flammschutzmittel enthalten. Der Anteil an Additiven hängt von dessen Art und der gewünschten Wirkung ab und beträgt für anorganische Füllstoffe in der Regel 10 bis 99 Gew.-%, bevorzugt 20 bis 98 Gew.-%, bezogen auf die Additiv-haltige Polymerbeschichtung

Bevorzugt enthält die Beschichtungsmischung wasserbindende Substanzen wie z.B. Wasserglas. Dies führt zu einer besseren bzw. schnelleren Verfilmung der Polymerdispersion und damit einem schnelleren Aushärten des Schaumstoffformteils.

Bevorzugt enthält die Polymerbeschichtung Flammschutzmittel, wie Blähgraphit, Borate, insbesondere Zinkborate, Melaminverbindungen oder Phosphorverbindungen oder intumeszierende Massen, welche sich bei Einwirkung höherer Temperaturen, in der Regel über 80 bis 100°C, aufblähen, quellen oder aufschäumen und dabei einen isolierenden und hitzebeständigen Schaum bilden, der die darunter liegenden wärmedämmende Schaumstoffpartikel vor der Feuer- und Hitzewirkung schützt. Die Menge der Flammschutzmittel oder intumeszierenden Massen beträgt in der Regel 2 bis 99 Gew.-%, bevorzugt 5 bis 98 Gew.-% bezogen auf die Polymerbeschichtung.

Bei Verwendung von Flammschutzmitteln in der Polymerbeschichtung, ist es auch möglich, einen ausreichenden Brandschutz bei Verwendung von Schaumstoffpartikeln, die keine, insbesondere keine halogenierten Flammschutzmittel enthalten, zu erreichen, bzw. mit geringeren Mengen an Flammschutzmittel auszukommen, da sich das Flammschutzmittel in der Polymerbeschichtung konzentriert auf der Oberfläche der Schaumstoffpartikel befindet und bei Hitze- oder Feuereinwirkung ein festes Gerüstnetz bildet.

Besonders bevorzugt enthält die Polymerbeschichtung als Additive intumeszierende Massen, die chemisch gebundenes Wasser enthalten oder bei Temperaturen über 40°C Wasser abspalten, wie Alkalimetallsilikate, Metallhydroxide, Metallsalz-Hydrate und Metalloxid-Hydrate.

Mit dieser Beschichtung versehene Schaum partikel können zu Schaumstoffformkörpern mit erhöhter Brandbeständigkeit, welche ein Brandverhalten der Klasse B gemäß DIN 4102 aufweisen. verarbeitet werden

Geeignete Metallhydroxide sind insbesondere solche der Gruppen 2 (Erdalkalimetalle) und 13 (Bor-Gruppe) des Periodensystems. Bevorzugt sind Magnesiumhydroxid und Aluminiumhydroxid. Letzteres ist besonders bevorzugt.

Als Metallsalz-Hydrate eignen sich alle Metallsalze, in deren Kristallstruktur Kristallwasser eingebaut ist. Analog eignen sich als Metalloxid-Hydrate alle Metalloxide, die in die Kristallstruktur eingebautes Kristallwasser enthalten. Dabei kann die Anzahl der Kristallwassermoleküle pro Formeleinheit die maximal mögliche sein oder darunter liegen, z.B. Kupfersulfat-Pentahydat, -Trihydrat oder -Monohydrat. Zusätzlich zum Kristallwasser können die Metallsalz-Hydrate bzw. Metalloxid-Hydrate auch Konstitutionswasser enthalten.

Bevorzugte Metallsalz-Hydrate sind die Hydrate von Metallhalogeniden (insbesondere -chloriden), -sulfaten, -carbonaten, -phosphaten, -nitraten oder -boraten. Geeignet sind beispielsweise Magnesiumsulfat-Decahydrat, Natriumsulfat-Decahydrat, Kupfersulfat-Pentahydrat, Nickelsulfat-Heptahydrat, Cobalt(II)chlorid-Hexahydrat, Chrom(III)-chlorid-Hexahydrat, Natriumcarbonat-Decahydrat, Magnesiumchlorid-Hexahydrat, und die Zinnborat-Hydrate. Magnesiumsulfat-Decahydrat und Zinnborat-Hydrate sind besonders bevorzugt.

Ebenfalls als Metallsalz-Hydrate in Betracht kommen Doppelsalze bzw. Alaune, beispielsweise solche der allgemeinen Formel:M^{I}M^{III} (SO₄)₂ 12 H₂O. Als M^{I} können z.B. Kalium, Natrium, Rubidium, Cäsium, Ammonium, Thallium oder Aluminium-Ionen auftreten. Als M^{III} fungieren z.B. Aluminium, Gallium, Indium, Scandium, Titan, Vanadium, Chrom, Mangan, Eisen, Cobalt, Rhodium oder Iridium.

Als Metalloxid-Hydrate eignen sich z.B. Aluminiumoxid-Hydrat und bevorzugt Zinkoxid-Hydrat oder Bortrioxid-Hydrat.

Eine bevorzugte Polymerbeschichtung kann durch Mischen von
40 bis 80, bevorzugt 50 bis 70 Gew.-Teilen einer Wasserglaslösung mit einem Wassergehalt von 40 bis 90, bevorzugt 50 bis 70 Gew.-%,
20 bis 60, bevorzugt 30 bis 50 Gew.-Teilen eines Wasserglaspulvers mit einem Wassergehalt von 0 bis 30, bevorzugt 1 bis 25 Gew.-%, und
5 bis 40, bevorzugt 10 bis 30 Gew.-Teile einer Polymerdispersion mit einem Feststoffgehalt von 10 bis 60, bevorzugt 20 bis 50 Gew.-%,
oder durch Mischen von
20 bis 95, bevorzugt 40 bis 90 Gew.-Teilen einer Aluminiumhydroxidsuspension mit einem Aluminiumhydroxidgehalt von 10 bis 90, bevorzugt 20 bis 70 Gew.-%,
5 bis 40, bevorzugt 10 bis 30 Gew.-Teile einer Polymerdispersion mit einem Feststoffgehalt von 10 bis 60, bevorzugt 20 bis 50 Gew.-%,
erhalten werden.

Bei dem erfindungsgemäßen Verfahren kann der Druck beispielsweise durch Verkleinerung des Volumens der Form mittels eines beweglichen Stempels erzeugt werden. In der Regel wird hierbei ein Druck im Bereich von 0,5 bis 30 kg/cm² eingestellt. Die Mischung aus beschichteten Schaumstoffpartikel wird hierzu in die geöffnete Form gefüllt. Nach dem Verschließen der Form werden die Schaumpartikel mit dem Stempel verpresst, wobei die Luft zwischen den Schaumstoffpartikeln entweicht und das Zwickelvolumen verringert wird. Die Schaumstoffpartikel werden durch die Polymerbeschichtung zum Schaumstoffformkörper verbunden.

Das Formwerkzeug wir entsprechend der gewünschten Geometrie des Schaumstoffkörpers ausgestaltet. Der Füllgrad richtet sich u.a. nach der gewünschten Dicke des späteren Formteils. Für Schaumstoffplatten kann eine einfache kastenförmige Form verwendet werden. Insbesondere bei komplizierteren Geometrien kann es erforderlich sein, die Schüttung der in die Form eingefüllten Partikel zu verdichten und auf diese Weise unerwünschte Hohlräume zu beseitigen. Das Verdichten kann z.B. durch Rütteln der Form, Taumelbewegungen oder andere geeignete Maßnahmen erfolgen.

Zur Beschleunigung des Abbindens kann Heißluft in die Form eingedrückt oder die Form beheizt werden. Erfindungsgemäß wird kein Wasserdampf in die Form eingebracht, damit keine wasserlöslichen Bestandteile der Polymerbeschichtung der Schaumstoffpartikel ausgewaschen werden und sich kein Kondenswasser in den Zwickeln bilden kann. Zur Temperierung der Form können jedoch beliebige Wärmeträgermedien, wie Öl oder Dampf eingesetzt werden. Die Heißluft bzw. die Form wird hierfür zweckmäßigerweise auf eine Temperatur im Bereich von 20 bis 120°C, bevorzugt 30 bis 90°C temperiert.

Alternativ oder zusätzlich kann das Versintern unter Einstrahlung von Mikrowellenenergie erfolgen. Hierbei werden in der Regel Mikrowellen im Frequenzenbereich zwischen 0,85 und 100 GHz, bevorzugt 0,9 bis 10 GHz und Bestrahlungszeiten zwischen 0,1 bis 15 Minuten verwendet.

Bei Verwendung von Heißluft mit Temperaturen im Bereich von 80 bis 150°C oder durch Einstrahlen von Mikrowellenenergie bildet sich üblicherweise ein Überdruck von 0,1 bis 1,5 bar, so dass das Verfahren auch ohne äußeren Druck und ohne Volumenverringerung der Form durchgeführt werden kann. Der durch die Mikrowellen oder höheren Temperaturen entstehenden Innendruck lässt die Schaumstoffpartikel leicht weiterexpandieren, wobei diese zusätzlich zur Verklebung über die Polymerbeschichtung auch durch Erweichung der Schaumpartikel selbst verschweißen können. Dabei verschwinden die Zwickel zwischen den Schaumstoffpartikeln. Zur Beschleunigung des Abbindens kann auch hier die Form wie oben beschrieben mit einem Wärmeträgermedium zusätzlich beheizt werden.

Zur kontinuierlichen Herstellung der erfindungsgemäßen Schaumstoffformkörper eignen sich auch Doppelbandanlagen wie sie zur Herstellung von Polyurethanschaumstoffen verwendet werden. Beispielsweise können die vorgeschäumten und beschichteten Schaumstoffpartikel kontinuierlich auf das untere von zwei Metallbänder, welche gegebenenfalls eine Perforation aufweisen können, aufgetragen werden und mit oder ohne Kompression durch die zusammenlaufenden Metallbänder zu endlosen Schaumstoffplatten verarbeitet werden. In einer Verfahrensausführung wird das Volumen zwischen den beiden Bändern zunehmend verringert, wodurch das Produkt zwischen den Bändern komprimiert wird und die Zwickel zwischen den Schaumstoffpartikeln verschwinden. Nach einer Aushärtungszone wird eine Endlos-Platte erhalten. In einer anderen Ausführungsform kann das Volumen zwischen den Bändern konstant gehalten werden und eine Zone mit Heißluft oder Mirkowellenbestrahlung durchlaufen in der die Schaumstoffpartikel nachschäumen. Auch hier verschwinden die Zwickel und eine Endlosplatte wird erhalten. Es ist auch möglich, die beiden kontinuierlichen Verfahrensauführungen zu kombinieren.
Die Dicke, Länge und Breite der Schaumstoffplatten kann in weiten Grenzen variieren und wird durch die Größe und Schließkraft des Werkzeugs begrenzt. Die Dicke der Schaumstoffplatten beträgt üblicherweise 1 bis 500 mm, bevorzugt 10 bis 300 mm.

Die Dichte der Schaumstoffformkörper gemäß DIN 53420 beträgt in der Regel 10 bis 120 kg/m³, bevorzugt 20 bis 70 kg/m³. Mit dem erfindungsgemäßen Verfahren ist es möglich, Schaumstoffformkörper mit gleichmäßigem Dichte über den gesamten Querschnitt zu erhalten. Die Dichte der Randschichten entspricht etwa der Dichte der inneren Bereiche des Schaumstoffformkörpers.

Das erfindungsgemäße Verfahren eignet sich zur Herstellung von einfachen oder komplexen Schaumstoffformteilen, wie Platten, Blöcken, Rohren, Stäben, Profilen, etc. Bevorzugt werden Platten oder Blöcke, welche anschließend zu Platten gesägt oder geschnitten werden können, hergestellt. Sie können beispielsweise im Bauwesen zur Dämmung von Außenwänden verwendet werden. Besonders bevorzugt werden sie als Kernschicht zur Herstellung von Sandwich-Element, beispielsweise sogenannten structural insulation panels (SIP) verwendet, welch für die Errichtung von Kühlhäuser oder Lagerhallen eingesetzt werden.

Weitere Anwendungsmöglichkeiten sind Paletten aus Schaumstoff als Ersatz für Holzpaletten, Deckensichtplatten, Kühlkontainer, Wohnwagen. Mit Flammschutzausrüstung eignen sich diese auch für die Luftfracht.

### Beispiele:

### Einsatzstoffe

| | |
|---|---|
| Persistol HP = | Hydrophobierungsmittel der BASF, wässrige Emulsion mit 22,8 % Paraffin, (Schmp. 52-54°C) und 9,6 % Harz aus N-Methylolmelamin und Stearylamid (Schmp. 70°C) |
| | |
| Ramasit KGT = | Hydrophobierungsmittel der BASF, wässrige Emulsion mit 16,6 % Paraffin (Schmp. 52-54°C) |

### Herstellung der Beschichtungsmischung B1:

Zu 60 Teilen einer Wasserglaslösung (Woellner Natriumsilikat 38/40, Feststoffanteil 36%, Dichte 1,37 Molverhältnis SiO₂:Na₂O = 3,4) wurden portionsweise unter Rühren 40 Teile Wasserglaspulver (Portil N) zugegeben und ca. 3 bis 5 Minuten homogenisiert. Anschließend wurden 20 Teilen einer Acrylatdispersion (Acronal S790, Feststoffgehalt ca. 50%) und 10 Teile Persitol HP untergerührt.

### Herstellung der Beschichtungsmischung B2:

Zu 60 Teilen einer Wasserglaslösung (Woellner Natriumsilikat 38/40, Feststoffanteil 36%, Dichte 1,37 Molverhältnis SiO₂:Na₂O = 3,4) wurden portionsweise unter Rühren 40 Teile Wasserglaspulver (Portil N) zugegeben und ca. 3 bis 5 Minuten homogenisiert. Anschließend wurden 20 Teilen einer Acrylatdispersion (Acronal S790, Feststoffgehalt ca. 50%) untergerührt.

### Herstellung der Beschichtungsmischung B3:

Zu 60 Teilen einer Wasserglaslösung (Woellner Natriumsilikat 38/40, Feststoffanteil 36%, Dichte 1,37 Molverhältnis SiO₂:Na₂O = 3,4) wurden portionsweise unter Rühren 40 Teile Wasserglaspulver (Portil N) zugegeben und ca. 3 bis 5 Minuten homogenisiert. Anschließend wurden 20 Teilen einer Acrylatdispersion (Acronal S790, Feststoffgehalt ca. 50%) und 10 Teile Ramasit KGT untergerührt.

### Herstellung der Beschichtungsmischung B4:

Zu 60 Teilen einer Wasserglaslösung (Woellner Natriumsilikat 38/40, Feststoffanteil 36%, Dichte 1,37 Molverhältnis SiO₂:Na₂O = 3,4) wurden portionsweise unter Rühren 40 Teile Wasserglaspulver (Portil N) zugegeben und ca. 3 bis 5 Minuten homogenisiert. Anschließend wurden 20 Teilen einer Acrylatdispersion (Acronal S790, Feststoffgehalt ca. 50%) untergerührt.

### Polystyrolschaumstoffpartikel I (Dichte 12 g/l)

Expandierbares Polystyrol (Styropor® F 315 der BASF Aktiengesellschaft )wurde auf einem kontinuierlichen Vorschäumer auf eine Dichte von ca. 12 g/l vorgeschäumt.

### Polystyrolschaumstoffpartikel II (Dichte 15 g/l)

Hydrophob modifiziertes, expandierbares Polystyrol (Peripor® der BASF Aktiengesellschaft) wurde auf einem kontinuierlichen Vorschäumer auf eine Dichte von ca.15 g/l vorgeschäumt.

### Beispiele 1 bis 3 und Vergleichsversuch V1

Die Polystyrolschaumpartikel I und II wurden in einem Mischer mit der Beschichtungsmischung B1, B2, B3, und B4 gemäß Tabelle 1 im Gewichtsverhältnis 1:2 beschichtet. Die beschichteten Polystyrolschaumpartikel wurden in eine auf 70°C temperierte, Teflonbeschichtete Form gefüllt und mit einem Stempel auf 50 % des ursprünglichen Volumens verpresst. Nach der Aushärtung bei 70°C für 30 Minuten wurde das Schaumstoffformteil entformt. Zur weiteren Konditionierung wurde das Formteil mehrere Tage bei Umgebungstemperatur gelagert. Die Dichte der gelagerten Formteile sind in Tabelle 1 zusammengestellt.

In einem Untertauchversuch wurde jeweils die Wasseraufnahme der Schaumstoffformkörper der Beispiele 1 bis 3 und des Vergleichsversuches untersucht. Dazu wurde ein 40x40x40mm Würfel der jeweiligen Materialien in ein Wasserbad untergetaucht. Nach definierten Zeiten wurde der Würfel herausgenommen, abtropfen lassen und sein Gewicht bestimmt. Alle erfindungsgemäßen Materialien der Beispiele 1 bis 3 zeichnen sich durch niedrigere Wasseraufnahme (%-Änderung des Gewichts bei Eintauchversuch) in Relation zum Produkt des Vergleichsversuchs aus:

| | Bsp.1 | Bsp.2 | Bsp.3 | V1 |
|---|---|---|---|---|
| Schaumpartikel | I | II | II | I |
| Beschichtung | B1 | B2 | B3 | B4 |
| Formteildichte [g/l] | 55 | 70 | 72 | 55 |

| Wasseraufn. | | | | |
|---|---|---|---|---|
| 0 | 6 | 8 | 8 | 6 |
| 3 Std. | 8 | 10 | 9 | 10 |
| 24 Std. | 11 | 12 | 11 | 13 |
| Änderung [%] | 83 | 50 | 38 | 117 |

Die Schaumstoffformkörper der Beispiele 1 bis 3 zeichnen sich dadurch aus, dass sie im Brandtest nicht abtropfen und bei Hitzeeinwirkung nicht zurückweichen. Sie selbstverlöschend und erfüllen die Anforderungen der Brandtests B2 bzw. E.

Aus den Schaumstoffplatten der Beispiele 1 bis 3 wurden Sandwich-Elemente mit Metalldeckschichten hergestellt: Platten mit den Abmessungen 600 x 100 x 100 mm und einer Dichte wie in den Beispielen angegeben wurde beidseitig mit einer jeweils 50 µm dicken Schicht eines Polyurethan-Klebstoffs versehen. Auf den Kleber wurden Stahlplatten von jeweils 1 mm Dicke aufgebracht. Man ließ den Kleber 5 Stunden lang bei 25°C aushärten.

Zur Prüfung des Brandverhaltens im Sandwich-Element wurde das Element waagerecht befestigt (Metallflächen oben und unten) und unter der Platte ein Gasbrenner platziert. Dessen Gasflamme war auf die Mitte der Plattenunterseite gerichtet, die Flamme war etwa 5 cm hoch und hatte eine Flammentemperatur von etwa 600°C. Der Abstand der Flammenspitze zur Unterseite der Platte betrug 2 cm.

Die Prüfung des Brandverhaltens ergab, dass nach 30 min Brenndauer der Flamme nur ein geringer Teil des Polystyrolschaums zwischen den Metallplatten geschmolzen war. Die mechanische Stabilität der Platte blieb erhalten. Der Polystyrolschaum tropfte nicht ab und entzündete sich nicht. Die Rauchentwicklung war sehr gering.

## Patentansprüche

1. Verfahren zur Herstellung von Schaumstoffformkörpern durch Versintern von vorgeschäumten Schaumstoffpartikeln, welche eine Polymerbeschichtung mit einer Glasübergangstemperatur im Bereich von -60 bis +60°C aufweisen, in einer Form unter Druck, **dadurch gekennzeichnet, dass** die Polymerbeschichtung eine amphiphile oder hydrophobe organische Verbindung enthält.

2. Verfahren nach Anspruch 1, **dadurch gekennzeichnet, dass** die Polymerbeschichtung ein C₁₀ - C₃₀- Paraffinwachs, ein Umsetzungsproduktes aus N-Methylolamin und einem Fettsäurederivate oder einem Polyfluoralkyl(meth)-acrylat oder Mischungen davon enthält.

3. Verfahren nach Anspruch 1 oder 2, **dadurch gekennzeichnet, dass** die vorgeschäumten Schaumpartikel in Abwesenheit von Wasserdampf versintert werden.

4. Verfahren nach einem der Ansprüche 1 bis 3, **dadurch gekennzeichnet, dass** als Schaumstoffpartikel expandiertes Polyolefin oder vorgeschäumte Partikel aus expandierbaren Styrolpolymeren eingesetzt werden.

5. Verfahren nach einem der Ansprüche 1 bis 4, **dadurch gekennzeichnet, dass** als Schaumstoffpartikel zerkleinerte Partikel aus recyclierten Schaumstoffformkörpern eingesetzt werden.

6. Verfahren nach einem der Ansprüche 1 bis 5, umfassend die Stufen
a) Vorschäumen von expandierbaren Styrolpolymeren zu Schaumstoffpartikeln,
b) Beschichten der Schaumstoffpartikel mit einer Polymerlösung oder wässrigen Polymerdispersion,
c) Einfüllen der beschichteten Schaumstoffpartikel in eine Form und Versintern unter Druck in Abwesenheit von Wasserdampf.

7. Verfahren nach Anspruch 6, **dadurch gekennzeichnet, dass** als Beschichtungsmittel in Stufe b) ein Acrylatdispersion und eine wässrige Emulsion eines C₁₀ - C₃₀- Paraffinwachses, eines Umsetzungsproduktes aus N-Methylolamin und einem Fettsäurederivate oder einem Polyfluoralkyl(meth)acrylat oder Mischungen davon eingesetzt werden.

8. Verfahren nach Anspruch 6, **dadurch gekennzeichnet, dass** das in Stufe a) eingesetzte expandierbare Styrolpolymer eine Beschichtung mit einer amphiphilen oder hydrophoben organische Verbindung aufweist.

9. Verfahren nach einem der Ansprüche 1 bis 8, **dadurch gekennzeichnet, dass** die Polymerbeschichtung Alkalimetallsilikate, Metallhydroxide, Metallsalz-Hydrate oder Metalloxid-Hydrate enthält.

10. Verfahren nach Anspruch 9, **dadurch gekennzeichnet, dass** die Polymerbeschichtung durch Mischen von
40 bis 80 Gew.-Teilen einer Wasserglaslösung mit einem Wassergehalt von 40 bis 90 Gew.-%,
20 bis 60 Gew.-Teilen eines Wasserglaspulvers mit einem Wassergehalt von 0 bis 30 Gew.-%, und
5 bis 40 Gew.-Teilen einer Polymerdispersion mit einem Feststoffgehalt von 10 bis 60 Gew.-%,
oder durch Mischen von
20 bis 95 Gew.-Teilen einer Aluminiumhydroxidsuspension mit einem Aluminiumhydroxidgehalt von 10 bis 90 Gew.-%,
5 bis 40 Gew.-Teilen einer Polymerdispersion mit einem Feststoffgehalt von 10 bis 60 Gew.-%,
erhalten wird.

## Claims

1. A process for producing foam moldings by sintering of prefoamed foam particles which have a polymer coating having a glass transition temperature in the range from -60 to +60°C, in a mold under pressure, wherein the polymer coating comprises an amphiphilic or hydrophobic organic compound.

2. The process according to claim 1, wherein the polymer coating comprises a C₁₀-C₃₀-paraffin wax, a reaction product of N-methylolamine and a fatty acid derivative or a polyfluoroalkyl (meth)-acrylate or mixtures thereof.

3. The process according to claim 1 or 2, wherein the preformed foam particles are sintered in the absence of steam.

4. The process according to any of claims 1 to 3, wherein expanded polyolefin or prefoamed particles of expandable styrene polymers are used as foam particles.

5. The process according to any of claims 1. to 4, wherein comminuted particles from recycled foam moldings are used as foam particles.

6. The process according to any of claims 1 to 5, which comprises the steps
a) preforming of expandable styrene polymers to give foam particles,
b) coating of the foam particles with a polymer solution or aqueous polymer dispersion,
c) introduction of the coated foam particles into a mold and sintering under pressure in the absence of water vapor.

7. The process according to claim 6, wherein an acrylate dispersion and an aqueous emulsion of a C₁₀-C₃₀-paraffin wax, a reaction product of N-methylolamine and a fatty acid derivative or a polyfluoroalkyl (meth)acrylate or mixtures thereof are used as coating composition in step b).

8. The process according to claim 6, wherein the expendable styrene polymer used in step a) has a coating comprising an amphiphilic or hydrophobic organic compound.

9. The process according to any of claims 1 to 8, wherein the polymer coating comprises alkali metal silicates, metal hydroxides, metal salt hydrates or metal oxide hydrates.

10. The process according to claim 9, wherein the polymer coating is obtained by mixing
from 40 to 80 parts by weight of a water glass solution having a water content of from 40 to 90% by weight,
from 20 to 60 parts by weight of a water glass powder having a water content of from 0 to 30% by weight and
from 5 to 40 parts by weight of a Polymer dispersion having a solids contest of from 10 to 60% by weight,
or by mixing
from 20 to 95 parts by weight of an aluminum hydroxide suspension having an aluminum hydroxide content of from 10 to 90% by weight,
from 5 to 40 parts by weight of a polymer dispersion having a solids content of from 10 to 60% by weight.

## Revendications

1. Procédé pour la production de corps en mousse par frittage de particules de mousse pré-transformées en mousse, qui présentent un enrobage en polymère ayant une température de transition vitreuse dans la plage de -60 à +60 °C, dans un moule sous pression, **caractérisé en ce que** l'enrobage en polymère contient un composé organique amphiphile ou hydrophobe.

2. Procédé selon la revendication 1, **caractérisé en ce que** l'enrobage en polymère contient une cire de paraffine en C₁₀-C₃₀, un produit de réaction de N-méthylolamine et d'un dérivé d'acide gras ou d'un poly[(méth)acrylate de fluoroalkyle] ou de mélanges de ceux-ci.

3. Procédé selon la revendication 1 ou 2, **caractérisé en ce que** les particules pré-transformées en mousse sont frittées en absence de vapeur d'eau.

4. Procédé selon l'une quelconque des revendications 1 à 3, **caractérisé en ce qu'**on utilise en tant que particules de mousse une polyoléfine expansée ou des particules pré-transformées en mousse à base de polymères de styrène expansibles.

5. Procédé selon l'une quelconque des revendications 1 à 4, **caractérisé en ce qu'**on utilise en tant que particules de mousse des particules fragmentées provenant de corps moulés en mousse recyclés.

6. Procédé selon l'une quelconque des revendications 1 à 5, comprenant les étapes
a) prémoussage de polymères de styrène expansibles en particules de mousse,
b) enrobage des particules de mousse avec une solution de polymère ou une dispersion aqueuse de polymère,
c) introduction des particules de mousse enrobées dans un moule et frittage sous pression en absence de vapeur d'eau.

7. Procédé selon la revendication 6, **caractérisé en ce qu'**on utilise en tant qu'agent d'enrobage dans l'étape b) une dispersion d'acrylate et une émulsion aqueuse d'une cire de paraffine en C₁₀-C₃₀, un produit de réaction de N-méthylolamine et d'un dérivé d'acide gras ou d'un polyl(méth)acrylate de fluoroalkyle] ou de mélanges de ceux-ci.

8. Procédé selon la revendication 6, **caractérisé en ce que** le polymère de styrène expansé qui est utilisé dans l'étape a) comporte un enrobage avec un composé organique amphiphile ou hydrophobe.

9. Procédé selon l'une quelconque des revendications 1 à 8, **caractérisé en ce que** l'enrobage en polymère contient des silicates de métaux alcalins, des hydroxydes de métaux, des sels métalliques hydratés ou des oxydes métalliques hydratés.

10. Procédé selon la revendication 9, **caractérisé en ce que** l'enrobage; en polymère est obtenu par mélange de
40 à 80 parties en poids d'une solution d'orthosilicate ayant une teneur en eau de 40 à 90 % en poids,
20 à 60 parties en poids d'une poudre d'orthosilicate ayant une teneur en eau de 0 à 30 % en poids, et
5 à 40 parties en poids d'une dispersion de polymère ayant une teneur en matière solide de 10 à 60% en poids,
ou par mélange de
20 à 95 parties en poids d'une suspension d'hydroxyde d'aluminium ayant une teneur en oxyde d'aluminium de 10 à 90 % en poids,
5 à 40 parties en poids d'une dispersion de polymère avant une teneur en matière solde 10 à 60 % en poids.
